# EUROPÄISCHE PATENTSCHRIFT

(11) **EP 1 008 496 B1**
(45) Veröffentlichungstag und Bekanntmachung des Hinweises auf die Patenterteilung: **18.02.2004**
(21) Anmeldenummer: 99121929.6
(22) Anmeldetag: 08.11.1999
(51) Int. Cl.: B60R 21/32, B60R 21/01

(54) **Vorrichtung zur Überwachung der Sitzposition eines Fahrzeuginsassen**
Apparatus for monitoring the position of a vehicle passenger
Dispositif pour surveiller la position d' un passager de véhicule

(30) Priorität: 07.12.1998 DE 19856311
(43) Veröffentlichungstag der Anmeldung: 14.06.2000
(73) Patentinhaber: Volkswagen Aktiengesellschaft, 38436 Wolfsburg (DE)
(72) Erfinder: Oehm, Klaus, Dipl.-Ing., 38518 Gifhorn (DE); Keinberger, Franz, 38116 Braunschweig (DE)

(56) Entgegenhaltungen:
- WO-A-98/48372
- US-A- 5 366 241
- US-A- 5 482 314
- PATENT ABSTRACTS OF JAPAN vol. 1998, no. 09, 31. Juli 1998 (1998-07-31) & JP 10 100858 A (TOYOTA AUTOM LOOM WORKS LTD;TOYOTA MOTOR CORP), 21. April 1998 (1998-04-21)
- R L PHEN ET AL: "Advanced Air Bag Technology Assessment - Final Report" NASA, April 1998 (1998-04), XP002137509

## Beschreibung

Die Erfindung betrifft eine Vorrichtung zur Überwachung der Sitzposition eines Fahrzeuginsassen eines mit einem Airbag ausgerüsteten Kraftfahrzeuges, die eine positionsauflösende Sensoreinrichtung aufweist, durch die zumindest die Position des Kopfes und/oder des Oberkörpers des Fahrzeuginsassens erfaßbar ist, und deren Sensorsignal einer Auswerteeinrichtung zuführbar ist, durch die die Position des oder der erfaßten Körperteile bestimmbar ist.

Aus der DE-OS 197 20 626 ist eine Fahrzeug-Überwachungsvorrichtung für Kraftfahrzeuge bekannt, durch die ein Fahrzustand eines Fahrers des Kraftfahrzeugs überwachbar ist. Das Verhalten des Fahrzeugs und/oder des Fahrers wird detektiert, um hierdurch Fahrzustand-Anzeigedaten zu erzeugen, die den Fahrzustand des Fahrers charakterisieren. Auf der Basis der Fahrzustand-Daten wird festgestellt, ob der Fahrzustand des Fahrers unnormal ist. Wenn dies nicht zutrifft, wird ein Maß an Normalität des Fahrzustandes des Fahrers durch Eingeben einer Mehrzahl von Einzeldaten der Fahrzustand-Anzeigedaten in ein neuronales Netz festgestellt. Wird hier festgestellt, daß der Fahrzustand des Fahrers unnormal ist, erfolgt eine Warnung und/oder eine Steuerung des Fahrzeugs.

Diese bekannte, neuronale Netze verwendende Vorrichtung besitzt des Nachteil, daß sie relativ aufwendig und daher teuer in ihrer Herstellung ist. Sie besitzt zwar den Vorteil, daß sie eine nahezu komplette Überwachung des Fahrers ermöglicht, welche jedoch bei einer Vielzahl von Anwendungsfällen nicht erforderlich ist. Dies trifft z. B. dann zu, wenn durch die Vorrichtung lediglich festgestellt werden soll, ob sich der Fahrzeuginsasse bei einem mit einem Airbag ausgerüsteten Kraftfahrzeug in einer COOP(critical-out-of-position-)-Haltung, in einer OOP(out-of-position)-Haltung oder in einer IP(in-position)-Haltung befindet.

Aus der US-A-5366241, welche den Oberbegriff des Anspruch 1 offenbart, ist eine Vorrichtung zur Überwachung der Sitzposition eines Fahrzeuginsassen bekannt, die eine positionsauflösende Sensoreinrichtung und eine Auswerteeinrichtung aufweist, so dass die Position des Fahrzeuginsassen erfassbar ist. In der Auswerteeinrichtung sind die zu erwartende Zeit für das Aufblasen des Airbags und der weg der Ausbildung des aufgeblasenen Airbags gespeichert.

Es ist daher Aufgabe der vorliegenden Erfindung, eine Vorrichtung der eingangs genannten Art derart weiterzubilden, daß durch die erfindungsgemäße Vorrichtung die Gefahr einer Verletzung des Fahrzeuginsassen durch einen expandierenden Airbag verhindert wird.
Diese Aufgabe wird durch eine Vorrichtunggemäß Anspruch 1 gelöst.

Durch die erfindungsgemäßen Maßnahmen wird in vorteilhafter Art und Weise eine sich durch ihren einfachen Aufbau auszeichnende Vorrichtung geschaffen, die es ermöglicht, den Fahrzeuginsassen "airbaggerecht" auf seinem Sitz zu positionieren: Das erfindungsgemäß vorgesehene optische und/oder akustische Warnsignal bewirkt im Regelfall, daß der Fahrzeuginsasse auf die Verletzungsgefahr, die bei einem sich entfaltenden Airbag durch seine anormale Sitzposition gegeben ist, aufmerksam gemacht wird und unverzüglich darauf reagieren kann, so daß das Verletzungsrisiko durch den Airbag durch eine entsprechende Reaktion des Fahrzeuginsassen reduziert oder eliminiert wird.

Eine vorteilhafte Weiterbildung der Erfindung sieht vor, daß das akustische Warnsignal durch eine von einem Sprachgenerator erzeugte Warnmeldung realisiert ist. Diese Maßnahme besitzt den Vorteil, daß durch eine derartige Sprachausgabe - wie z. B. "Vorsicht Airbag" - dem Fahrzeuginsassen unmittelbar die Warnung übermittelt wird, daß er sich in einem in bezug auf einen sich entfaltenden Airbag kritischen Bereich befindet oder gerade dabei ist, in diesen Bereich einzudringen.

Die Erfindung sieht vor, daß durch die Auswerteeinrichtung der Vorrichtung feststellbar ist, ob sich der Fahrzeuginsasse in einer "critical-out-of-position"-Haltung oder "lediglich" in einer "out-of-position"-Haltung befindet, und in einer weiteren Ausbildung, daß im erstgenannten Fall ein erstes Warnsignal und im zweitgenannten Fall ein zweites Warnsignal erzeugt wird, wobei das erste Warnsignal vom zweiten Warnsignal unterschiedlich ist. Eine derartige Maßnahme besitzt den Vorteil, daß hierdurch eine Abstufung der Warnfunktion der Vorrichtung erzielbar ist.

Eine weitere vorteilhafte Weiterbildung der Erfindung sieht vor, daß für eine Vielzahl von unterschiedlichen Positionen im COOP- und/oder im OOP-Bereich jeweils ein unterschiedliches optisches und/oder akustisches Warnsignal erzeugt wird. Eine derartige Maßnahme besitzt den Vorteil, daß der Fahrzeuginsasse sofort erkennen kann, wie kritisch im Hinblick auf die bestehende Verletzungsgefahr seine Haltung ist.

Eine weitere vorteilhafte Weiterbildung der Erfindung sieht vor, daß die Vorrichtung ein Steuersignal für eine vorrichtungsexterne Signalquelle erzeugt, und daß diese Signalquelle das optische und/oder akustische Warnsignal abgibt. Diese Maßnahme besitzt den Vorteil, daß hierdurch bereits im Kraftfahrzeug vorhandene Signalquellen, wie z. B. die Lautsprecher eines Autoradios und/oder ein Sprachgenerator eines Navigationssystems, zur Erzeugung des Warnsignals verwendbar sind.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, daß im folgenden anhand der einzigen Figur beschrieben wird. Es zeigt:

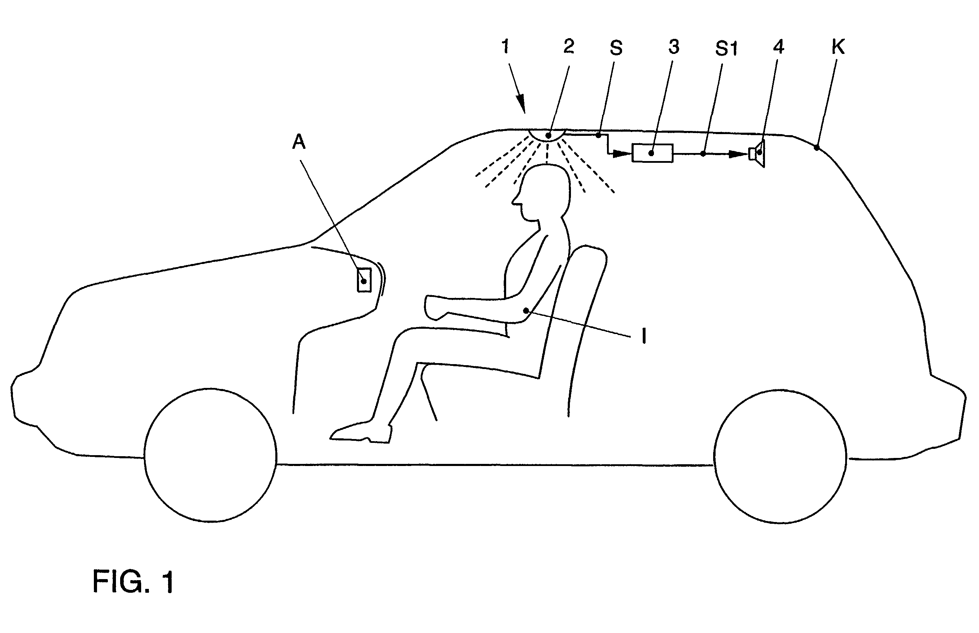

Figur 1 ein Ausführungsbeispiel einer Vorrichtung

Das in Figur 1 dargestellte Ausführungsbeispiel einer Vorrichtung 1 zur Überwachung der Sitzposition eines Kraftfahrzeuginsassen I besteht im wesentlichen aus einer Sensoreinrichtung 2, durch die zumindest der Kopfbereich und/oder der Oberkörperbereich des Insassen l des Kraftfahrzeugs K überwachbar ist, einer Auswerteeinrichtung 3, der das Ausgangssignals S der positionsauflösenden Sensoreinrichtung 2 zugeführt ist, und aus einer optischen und/oder akustischen Signalquelle 4, durch die ein optisches und/oder akustisches Warnsignal erzeugbar und in den Innenraum des Kraftfahrzeugs K abgebbar ist. Die Sensoreinrichtung 2 zur Erfassung der Position des Fahrzeuginsassens l ist an und für sich bekannt und muß daher nicht mehr näher beschrieben werden.

Die Funktionsweise der Vorrichtung 1 ist nun wie folgt: Die Auswerteeinrichtung 3 bestimmt aus dem ihr zugeführten Sensorsignal S des Sensors 2 die räumliche Position des Fahrzeuginsassens I, wobei es für eine Vielzahl von Anwendungsfällen ausreichend ist, daß lediglich die Position des Kopfes des Fahrzeuginsassens I und/oder seines Oberkörpers ermittelt wird. In der Auswerteeinrichtung 3 ist das räumlicher Entfaltungsprofil eines Airbags A des Kraftfahrzeugs K abgespeichert. Die Auswerteeinrichtung 3 ermittelt nun aufgrund der ihr vorliegenden Position des Insassens I, ob sich dieser bei einem sich nun entfaltenden Airbags A verletzt werden könnte, d. h., ob sich der Insasse l im OOP(out-of-position)-Bereich, in COOP(critical-out-of-position)-Bereich oder im IP(in-position)-Bereich befindet. Trifft einer der beiden erstgenannten Fälle zu, so wird ein Steuersignal S1 erzeugt, welches bewirkt, daß die Signalquelle 4 ein optisches und/oder akustisches Warnsignal abgibt. Dies veranlaßt den Fahrzeuginsassen I dann, seine im Hinblick auf das räumliche Entfaltungsprofil des Airbags A kritische Position unverzüglich aufzugeben und in die IP(in-position)-Haltung zurückzukehren.

ES ist vorgesehen, daß die Auswerteeinrichtung 3 unterscheidet, ob sich der Insasse I in einer COOP- oder in einer OOP-Position berfindet und dann ein Steuersignal SS für die Signalquelle 4 erzeugt, welches einer dieser beiden Fälle charakterisiert. Die Signalquelle 4 erzeugt dann bei einem COOP-Fall ein optisches und/oder akustisches erstes Warnsignal, welches sich von dem im Falle einer OOP-Haltung des Insassens l abzugebenden zweiten Warnsignal unterscheidet, so daß der Insasse I des Kraftfahrzeugs K aus dem abgegebenen Warnsignal erkennen kann, ob er sich in einer OOP- oder bereits in einer COOP-Haltung befindet.

Es kann auch vorgesehen sein, daß für eine Vielzahl von unterschiedlichen Haltungen unterschiedliche Warnsignale gegeben werden, so daß hierdurch dem Insassen I bewußt gemacht wird, wie kritisch seine Haltung bezüglich des expandierenden Airbag A ist.

Bei dem akustischen Warnsignal wird bevorzugt, daß dieses durch eine Sprachmeldung - wie z. B. der Warnung "Vorsicht Airbag" - eines Sprachgenerators realisiert ist. Hierdurch wird dem Insassen unmittelbar und ohne weitere Denkprozesse klargemacht, daß er sich in einem kritischen Bereich befindet oder gerade dabei ist, in diesen Bereich einzudringen. Die Abgabe der Warnmeldung durch eine leicht verständliche Sprachausgabe besitzt den Vorteil, daß der Fahrzeuginsasse dann beim Auftreten dieser Warnmeldung nicht überlegen muß, worauf sich diese Warnmeldung bezieht, wie es z. B. dann der Fall wäre, wenn nur ein Tonsignal abgegeben würde, bei dem sich der Fahrzeuginsasse erst bewußt werden müßte, welcher Einrichtung oder welcher Funktion dieses Warnsignal zuzuordnen ist.

Als Signalquelle 4 kann eine interne Signalquelle der Vorrichtung 1 eingesetzt werden. Es ist aber auch möglich, eine externe Vorrichtung als Signalquelle zur Erzeugung des Warnsignals heranzuziehen. Beispielhafterweise können hierzu Lautsprecher eines bereits existenten Autoradios und/oder der Sprachgenerator eines Navigationssystems verwendet werden.

Die Auswertevorrichtung 3 ist entweder eine in die Vorrichtung 1 integrierte Auswertevorrichtung oder es wird hierzu ein bereits im Fahrzeug vorhandener Mikroprozessor/Bordcomputer verwendet werden.

### BEZUGSZEICHENLISTE

- 1.: Vorrichtung
- 2.: Sensoreinrichtung
- 3.: Auswerteeinheit
- 4.: Signalquelle

- A: Airbag
- l: Kraftfahrzeuginsasse
- K: Kraftfahrzeug
- S: Sensorsignal
- S1: Sensorsignal

## Patentansprüche

1. Vorrichtung (1) zur Überwachung der Sitzposition eines Fahrzeuginsassen (I) eines mit einem Airbag (A) ausgerüsteten Kraftfahrzeugs (K), die eine positionsauflösende Sensoreinrichtung (2) aufweist, durch die zumindest die Position des Kopfes und/oder des Oberkörpers des Fahrzeuginsassens (I) erfaßbar ist, und deren Sensorsignal (S) einer Auswerteeinrichtung (3) zuführbar ist, durch welche die Position des oder der erfaßten Körperteile des Fahrzeuginsassen (I) bestimmbar ist wobei, in der Auswerteeinrichtung (3) ein räumliches Entfaltungsprofil des Airbags (A) gespeichert ist, und wobei mittels der Auswertevorrichtung (3) die aus dem Sensorsignal (S) der Sensoreinrichtung (2) bestimmte räumliche Position dahingehend auswertbar ist, ob sich ein überwachtes Körperteil des Fahrzeuginsassens (I) in einer Verletzungsgefahr durch eine anormale Sitzposition befindet, und daß beim Feststellen einer Verletzungsgefahr durch eine anormale Sitzposition durch die Auswerteeinrichtung (3) ein optisches und/oder akustisches Warnsignal erzeugbar ist,
**dadurch gekennzeichnet, daß** durch die Auswerteeinrichtung (3) aus dem ihr zugeführten Sensorsignal (S) feststellbar ist, ob sich der Fahrzeuginsasse (I) im out-of-position oder im critical-out-of position-Bereich bezüglich des Airbags (A) befindet.

2. Vorrichtung nach Anspruch 1, **dadurch gekennzeichnet, daß** bei einer critical-out-ofposition-Position des Fahrzeuginsassens (I) ein erstes Warnsignal und bei einer out-ofposition-Position des Fahrzeuginsassens (I) ein zweites Warnsignal erzeugt wird, wobei das erste Warnsignal vom zweiten Warnsignal unterschiedlich ist.

3. Vorrichtung nach einem der vorangehenden Ansprüche, **dadurch gekennzeichnet, daß** für eine Vielzahl von unterschiedlichen Positionen im critical-out-of-position - und/oder out-of-position-Bereich jeweils ein unterschiedliches optisches und/oder akustisches Warnsignal erzeugt wird.

4. Vorrichtung nach einem der vorangehenden Ansprüche, **dadurch gekennzeichnet, daß** die Vorrichtung ein Steuersignal (S1) für eine vorrichtungsexterne Signalquelle (4) erzeugt, und daß diese Signalquelle (4) das optische und/oder akustische Warnsignal abgibt.

5. Vorrichtung nach Anspruch 4, **dadurch gekennzeichnet, daß** die vorrichtungsexterne Signalquelle (4) ein Lautsprecher des Autoradios und/oder ein Sprachgenerator eines Navigationssystems ist.

6. Vorrichtung nach den Ansprüche 3-5, **dadurch gekennzeichnet, daß** das akustische Warnsignal durch eine Sprachausgabe eines Sprachgenerators realisiert ist.

## Claims

1. Device (1) for monitoring the seated position of a vehicle occupant (I) of a motor vehicle (K) which is equipped with an airbag (A) and which has a position-resolving sensor device (2) by means of which at least the position of the head and/or of the upper body of the vehicle occupant (I) can be sensed, and whose sensor signal (S) can be fed to an evaluation device (3) by means of which the position of the sensed body parts of the vehicle occupant (I) can be determined, a spatial unfolding profile of the airbag (A) being stored in the evaluation device (3), and the spatial position which is determined from the sensor signal (S) of the sensor device (2) being capable of being evaluated by means of the evaluation device (3) to determine whether a monitored body part of the vehicle occupant (I) is at risk of injury as a result of an abnormal seated position, and in that when the risk of injury is detected as a result of an abnormal seated position, a visual and/or audible warning signal can be generated by the evaluation device (3), **characterized in that** the evaluation device (3) can determine, from the sensor signal (S) fed to it, whether the vehicle occupant (I) is in the out-of-position or in the critical-out-of-position region with respect to the airbag (A).

2. Device according to Claim 1, **characterized in that** in the case of a critical-out-of-position position of the vehicle occupant (I) a first warning signal is generated, and in the case of an out-of-position position of the vehicle occupant (I) a second warning signal is generated, the first warning signal being different from the second warning signal.

3. Device according to one of the preceding claims, **characterized in that** a different audible and/or visual warning signal is respectively generated for a multiplicity of different positions in the critical-out-of-position range and/or out-of-position range.

4. Device according to one of the preceding claims, **characterized in that** the device generates a control signal (S1) for a signal source (4) which is external to the device, and **in that** this signal source (4) outputs the visual and/or audible warning signal.

5. Device according to Claim 4, **characterized in that** the signal source (4) which is external to the device is a loudspeaker of the car radio and/or a speech generator of a navigation system.

6. Device according to Claims 3 to 5, **characterized in that** the audible warning signal is implemented by means of a speech output of a speech generator.

## Revendications

1. Dispositif (1) pour surveiller la position assise d'un passager (I) de véhicule d'un véhicule à moteur (K) muni d'un coussin gonflable de sécurité (A), comportant une installation de capteur (2) déterminant une position, grâce à laquelle au moins la position de la tête et/ou du buste du passager (I) du véhicule peut être acquise, et dont le signal du capteur (S) peut être amené à une unité d'évaluation (3) permettant de déterminer la position de la ou des parties du corps du passager (I) du véhicule acquises, un profil de déploiement dans l'espace du coussin gonflable de sécurité (A) étant mémorisé dans l'unité d'évaluation (3), et l'unité d'évaluation (3) permettant d'exploiter la position dans l'espace déterminée à l'aide du signal du capteur (S) de l'installation de capteur (2) afin de déterminer si une partie surveillée du corps du passager (I) du véhicule court un risque de blessure du fait d'une position assise anormale et, si un risque de blessure est constaté du fait d'une position assise anormale, l'unité d'évaluation (3) émettant un signal avertisseur optique et/ou acoustique,
**caractérisé en ce que** l'unité d'évaluation (3) peut déterminer, sur la base du signal de capteur (S) qu'elle reçoit, si le passager (I) du véhicule se trouve dans la zone out-of-position ou dans la zone critical-out-of-position par rapport au coussin gonflable de sécurité (A).

2. Dispositif selon la revendication 1, **caractérisé en ce que**, dans le cas d'une position critical-out-of-position du passager (I) du véhicule, un premier signal avertisseur, et, dans le cas d'une position out-of-position du passager (I) du véhicule, un second signal avertisseur sont générés, le premier signal avertisseur étant différent du second signal avertisseur.

3. Dispositif selon l'une des revendications précédentes, **caractérisé en ce qu'**un signal aventisseur optique et/ou acoustique différent est généré pour chacune d'une pluralité de positions différentes dans la zone critical-out-of-position et/ou dans la zone out-of-position.

4. Dispositif selon l'une des revendications précédentes, **caractérisé en ce que** le dispositif génère un signal de commande (S1) pour une source de signal externe (4) au dispositif et **en ce que** cette source de signal (4) émet le signal avertisseur optique et/ou acoustique.

5. Dispositif selon la revendication 4, **caractérisé en ce que** la source de signal externe (4) au dispositif est un haut-parleur de l'autoradio et/ou un générateur vocal d'un système de navigation.

6. Dispositif selon les revendications 3-5, **caractérisé en ce que** le signal avertisseur acoustique est réalisé par une émission vocale d'un générateur vocal.
